# EUROPÄISCHE PATENTSCHRIFT

(11) **EP 2 886 380 B1**
(45) Veröffentlichungstag und Bekanntmachung des Hinweises auf die Patenterteilung: **13.02.2019**
(21) Anmeldenummer: 14196625.9
(22) Anmeldetag: 05.12.2014
(51) Int. Cl.: B60J 7/12

(54) **Antriebsvorrichtung eines Verdecks eines Cabriolet-Fahrzeugs**
Drive device of a top for a convertible
Dispositif d'entraînement d'une capote d'un véhicule cabriolet

(30) Priorität: 20.12.2013 DE 102013114717
(43) Veröffentlichungstag der Anmeldung: 24.06.2015
(73) Patentinhaber: Valmet Automotive Oy, 23500 Uusikaupunki (FI)
(72) Erfinder: Habacker, Norbert, 49565 Bramsche (DE)
(74) Vertreter: Kronthaler, Wolfgang N.K.

(56) Entgegenhaltungen:
- DE-A1- 4 443 405
- DE-B4- 10 313 496
- FR-A- 598 400
- JP-A- 2006 347 396

## Beschreibung

Die Erfindung betrifft eine Antriebsvorrichtung eines Verdecks eines Cabriolet-Fahrzeugs, mittels welcher ein erstes Schwenkbauteil und eine zweites Schwenkbauteil verlagerbar sind, nach der im Oberbegriff des Patentanspruches 1 näher definierten Art.

Aus der DE 10 2011 101 972 B3 ist eine Antriebsvorrichtung bekannt, mittels welcher sowohl eine Hauptsäule als auch über eine Lenkerkette ein Spannbügel antreibbar sind. Die Antriebsvorrichtung weist hierzu ein segmentförmiges Schwenkantriebsteil mit einer außenseitigen Verzahnung auf, in welches ein durch einen Antrieb antreibbares Ritzel eingreift. Das Schwenkantriebsteil weist einen ersten Winkelbereich und einen zweiten, direkt an den ersten Winkelbereich grenzenden Winkelbereich auf. Bei mit dem ersten Winkelbereich des Schwenkantriebsteils zusammenwirkendem Ritzel ist die Hauptsäule von dem Schwenkantriebsteil entkoppelt und der Stoffhaltebügel wird über eine Kopplung mittels mehrerer Lenker bewegt. Wenn das Ritzel dagegen mit dem zweiten Winkelbereich des Schwenkantriebsteils zusammenwirkt, ist die Hauptsäule dagegen drehfest mit dem Schwenkantriebsbauteil verbunden und kann verschwenkt werden. Eine Bewegung des Stoffhaltebügels findet in dieser Bewegungsphase nicht statt.

Die Bewegungen des Stoffhaltebügels und der Hauptsäule müssen bei dieser Ausführung allerdings nachteilhafterweise sequentiell nacheinander durchgeführt werden, so dass bei einem Verdecköffnungsvorgang zunächst der Stoffhaltebügel geöffnet wird und anschließend mit dem restlichen Verdeck in einen heckseitigen Ablageraum bewegt wird.

Aus der DE 103 13 496 B4 ist ein Faltverdeck eines Cabriolets bekannt, wobei ein Hauptlenker und ein Riegelhaken über einen Elektromotor verschwenkbar sind. Der Elektromotor wirkt hierzu über ein drehfest mit dem Elektromotor verbundenes Schneckenrad mit einem drehfest mit einer Trägerplatte verbundenen Zahnrad zusammen. Mit der Trägerplatte ist drehfest ein Antriebsritzel verbunden, mittels dem eine Drehbewegung des Schneckenrads über ein Zwischenrad auf ein drehfest mit dem Hauptlenker verbundenes Zahnsegment übertragbar ist. Die Trägerplatte weist weiterhin Langlöcher auf, in die hauptlagerfeste Zapfen eingreifen. Bei geschlossenem Faltverdeck führt eine Antriebsbewegung des Schneckenrads zunächst über ein Zusammenspiel der Zapfen mit den Langlöchern zu einer Verschwenkung der Trägerplatte und somit des Riegelhakens und anschließend zu einer Verschwenkung des Hauptlenkers.

Aus der JP2006347396 ist ein Antriebsvorrichtung gemäß dem Oberbegriff des Anspruchs 1 bekannt.

Es ist Aufgabe der vorliegenden Erfindung, eine Antriebsvorrichtung eines Verdecks eines Cabriolet-Fahrzeugs der eingangs genannten Art zu schaffen, mit welcher zwei Schwenkbauteile flexibel ansteuerbar sind.

Diese Aufgabe wird mit einer Antriebsvorrichtung gemäß den Merkmalen des Patentanspruches 1 gelöst.

Es wird somit eine Antriebsvorrichtung eines Verdecks eines Cabriolet-Fahrzeugs vorgeschlagen, mittels welcher ein erstes Schwenkbauteil und ein zweites Schwenkbauteil verlagerbar ist, mit zwei Zahnrädern, von denen ein erstes Zahnrad mit dem ersten Schwenkbauteil und ein zweites Zahnrad mit dem zweiten Schwenkbauteil koppelbar ist und die Zahnräder miteinander in Eingriff sind.

Erfindungsgemäß ist vorgesehen, dass das zweite Zahnrad gegenüber dem ersten Zahnrad drehfest festlegbar ist, so dass die Bewegung des ersten Schwenkbauteils unabhängig von einer Bewegung des zweiten Schwenkbauteils durchführbar ist, und zur Verlagerung des ersten Schwenkbauteils das erste Zahnrad auf dem zweiten Zahnrad abrollbar gelagert ist und zur Verlagerungsbewegung des zweiten Schwenkbauteils das zweite Zahnrad vorzugsweise um seinen Mittelpunkt drehbar gelagert ist.

Die erfindungsgemäße Antriebsvorrichtung hat den Vorteil, dass die Schwenkbauteile grundsätzlich über einen konstruktiv einfach ausgeführten Mechanismus unabhängig voneinander bewegt werden können. Es ist somit möglich, die Reihenfolge oder Bewegungsabschnitte der Bewegungen der Schwenkbauteile beliebig durchzuführen. Zudem ist es möglich, die Bewegungen vollständig oder teilweise simultan auszuführen. Hierdurch ist die erfindungsgemäße Antriebsvorrichtung für eine Vielzahl von Anwendungsfällen einsetzbar und ermöglicht auch komplexe Bewegungsab- und -reihenfolgen der einzelnen Schwenkbauteile.

Das zweite Zahnrad ist insbesondere dann gegenüber dem ersten Zahnrad drehfest festlegbar, wenn zur Verlagerung des ersten Schwenkbauteils das erste Zahnrad auf dem zweiten Zahnrad abrollt und lediglich das erste Schwenkbauteil bewegt werden soll. Hierdurch ist es möglich, die Bewegung des ersten Schwenkbauteils unabhängig von einer Bewegung des zweiten Schwenkbauteils durchzuführen.

Im Rahmen dieser Schrift wird unter dem Begriff Zahnrad sowohl ein mit über dem gesamten Umfang verteilten Zähnen ausgebildetes Rad - wie es insbesondere das erste Zahnrad darstellt - als auch ein Zahnsegment - wie es insbesondere das zweite Zahnrad darstellt - verstanden.

Insbesondere zur Verlagerung des zweiten Schwenkbauteils wenn das zweite Zahnrad dreht, ist das erste Zahnrad bei einer vorteilhaften Ausführung der Erfindung ortsfest festlegbar. Hierdurch wird sichergestellt, dass das zweite Schwenkbauteil unabhängig von dem ersten Schwenkbauteil bewegt werden kann, d. h. dass das zweite Schwenkbauteil bei in seiner aktuellen Position festgelegtem erstem Schwenkbauteil bewegt werden kann.

Um eine Bewegung der einzelnen Schwenkbauteile automatisiert durchführen zu können, ist bei einer vorteilhaften Ausführung der erfindungsgemäßen Antriebsvorrichtung das erste Zahnrad von einer Antriebseinrichtung, insbesondere einem Elektromotor, antreibbar. Es ist somit vorteilhafterweise lediglich eine Antriebseinrichtung nötig, um sowohl die Schwenkbewegung des ersten Schwenkbauteils als auch die Schwenkbewegung des zweiten Schwenkbauteils durchzuführen.

Wenn die Antriebseinrichtung über ein Zwischengetriebe mit wenigstens einem Zahnrad mit dem ersten Zahnrad zusammenwirkt, kann eine gewünschte Übersetzung zwischen einem Antriebszahnrad und dem ersten Zahnrad auf einfache Weise auf einen gewünschten Wert eingestellt werden.

Das erste Zahnrad und das zweite Zahnrad sind bei einer konstruktiv einfachen Ausführung der Erfindung über einen Hebel miteinander verbunden, an welchem sowohl ein Mittelpunkt des ersten Zahnrads als auch ein Mittelpunkt des zweiten Zahnrads drehbar gelagert ist.

Bei einer vorteilhaften Ausführung einer erfindungsgemäßen Antriebsvorrichtung ist die Antriebseinrichtung mit dem Hebel verbunden.

Um im Falle einer Notsituation auch eine manuelle Bewegung der Schwenkbauteile durchführen zu können, kann die Antriebseinrichtung vorzugsweise außer Eingriff mit dem ersten Zahnrad gebracht werden.

Bei einer vorteilhaften Ausführung der Erfindung ist eine Sperreinrichtung vorgesehen, mittels welcher eine Position des ersten Zahnrads gegenüber dem zweiten Zahnrad definiert festlegbar ist. Hierbei kann es vorgesehen sein, dass das erste Zahnrad über die Sperreinrichtung ortsfest festlegbar ist, so dass bei einer Antriebsbewegung der Antriebseinrichtung das zweite Zahnrad durch die Drehbewegung des ersten Zahnrads in eine Drehbewegung versetzbar ist. Bei einer hierzu alternativen Ausführung der Erfindung kann es auch vorgesehen sein, dass keine Sperreinrichtung vorgesehen ist und die jeweiligen Schwenkbewegungen der Schwenkbauteile allein aufgrund der im System wirkenden Gewichtskräfte in einem gewünschten Ablauf durchgeführt werden.

Die Sperreinrichtung kann in einer einfachen Ausführung der Erfindung mit einem Schwenkhebel ausgebildet sein, der ortsfest gelagert ist und zur ortsfesten Festlegung des ersten Zahnrads in Eingriff mit dem Hebel bringbar ist. Der Schwenkhebel kann dabei derart ausgeführt sein, dass er einen an dem Hebel angeordneten Anschlag bzw. Bolzen umgreift und entgegen einer Bewegung des Hebels in beiden Drehrichtungen festlegt.

Um sicherzustellen, dass der Schwenkhebel alleine durch eine Kraftübertragung in einer Richtung betätigbar ist, kann der Schwenkhebel mittels einer Federeinrichtung mit einer den Schwenkhebel in Richtung ihrer in Eingriff mit dem Hebel befindlichen Position drückenden Kraft beaufschlagt sein.

Der Schwenkhebel ist bei einer vorteilhaften Ausführung der erfindungsgemäßen Antriebsvorrichtung in eine in Eingriff mit dem zweiten Zahnrad befindliche Position bewegbar, in welcher eine Drehung des zweiten Zahnrads verhindert ist. Hierdurch kann auf einfache Weise die Bewegung des jeweils gewünschten Schwenkbauteils sichergestellt werden.

Zur Bewegung des Schwenkhebels außer Eingriff mit dem Hebel ist bei einer konstruktiv einfachen Ausführung der Erfindung ein Betätigungselement vorgesehen, welches beispielsweise als Bowdenzug, Seilzug oder dergleichen ausgeführt ist.

Bei einer vorteilhaften Ausführung der Erfindung ist das erste Zahnrad mit einem Stoffhaltebügel des Verdecks und das zweite Zahnrad mit einem Hauptlenker oder einer Hauptsäule des Verdecks entweder direkt oder über eine Zwischenschaltung beispielsweise mehrerer Lenker gekoppelt. Wenn das Betätigungselement mit der Bewegung eines Elements des Cabriolet-Fahrzeugs, insbesondere eines Heckdeckels bzw. Verdeckkastendeckels gekoppelt ist, kann nach einer Aufschwenkbewegung des Stoffhaltebügels und einem darauffolgenden Öffnungsvorgang des Deckels ohne separate Antriebseinrichtung der Schwenkhebel betätigt werden und das Verdeck durch eine Bewegung des Hauptlenkers bzw. der Hauptsäule in seine Ablageposition überführt werden.

Neben dem beschriebenen Anwendungsfall ist die erfindungsgemäße Antriebsvorrichtung grundsätzlich für die Bewegung sämtlicher schwenkbarer Elemente bei einer Verdeckbewegung einsetzbar, wobei es sich bei dem Verdeck sowohl um ein Softtop als auch um ein Hardtop handeln kann.

Sowohl die in den Patentansprüchen angegebenen Merkmale als auch die in dem nachfolgenden Ausführungsbeispiel der erfindungsgemäßen Antriebsvorrichtung angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen der erfindungsgemäßen Antriebsvorrichtung ergeben sich aus den Patentansprüchen und den nachfolgend unter Bezugnahme auf die Zeichnung prinzipmäßig beschriebenen Ausführungsbeispielen.

Es zeigt:
- Fig. 1: eine vereinfacht dargestellte dreidimensionale Ansicht eines Softtop-Verdecks eines Cabriolet-Fahrzeugs in einer geschlossenen Position, wobei zusätzlich eine Lenkerkinematik eines Verdeckkastendeckels mit einer diesen betätigenden Antriebseinheit ersichtlich ist, und wobei ein Verdeckbezug des Verdecks der besseren Übersichtlichkeit halber nicht dargestellt ist;
- Fig. 2: einen Ausschnitt des Softtop-Verdecks der Fig. 1 aus einer anderen Perspektive, wobei eine einer linken Verdeckseite zugeordnete Antriebseinrichtung ersichtlich ist, mittels welcher ein Stoffhaltebügel verschwenkbar ist, und mittels welchem das Verdeck zwischen seiner geschlossenen Position und einer offenen Position verlagerbar ist;
- Fig. 3: eine Seitenansicht von außen auf die Antriebsvorrichtung der Fig. 2 in einer Position bei geschlossenem Verdeck;
- Fig. 4: eine Seitenansicht von innen auf die Antriebsvorrichtung der Fig. 2 in einer Position bei geschlossenem Verdeck;
- Fig. 5: eine vereinfachte dreidimensionale Ansicht eines Ausschnitts eines Softtop-Verdeck eines CabrioletFahrzeugs in einer geschlossenen Position mit einer alternativ ausgeführten Antriebsvorrichtung;
- Fig. 6: eine Seitenansicht des Softtop-Verdecks der Fig. 5, wobei ein Stoffhaltebügel in einer aufgeschwenkten Position gezeigt ist;
- Fig. 7: eine vereinfachte Ansicht des Verdecks der Fig. 5 und 6, wobei das Verdeck in einer Zwischenstellung zwischen der geschlossenen und einer offenen Position gezeigt ist;
- Fig. 8: eine vereinfachte Ansicht des Verdecks der Fig. 5 bis 7 in der offenen Position;
- Fig. 9: eine vereinfachte Detailansicht der Antriebsvorrichtung der Fig. 5 bei geschlossenem Verdeck von einer Verdeckaußenseite aus betrachtet, wobei ein Hauptlager nicht dargestellt ist;
- Fig. 10: eine der Fig. 9 entsprechende Ansicht der Antriebsvorrichtung in einer Position mit aufgeschwenktem Stoffhaltebügel und sich in einer ersten Stellung befindlichem Schwenkhebel einer Sperreinrichtung;
- Fig. 11: eine den Fig. 9 und 10 entsprechende Ansicht der Antriebsvorrichtung mit aufgeschwenktem Stoffhaltebügel und sich in einer zweiten Stellung befindlichem Schwenkhebel;
- Fig. 12: eine den Fig. 9 bis 11 entsprechende Ansicht der Antriebsvorrichtung bei sich in der offenen Position befindlichem Verdeck und sich in der zweiten Position befindlichem Schwenkhebel; und
- Fig. 13: eine den Fig. 9 bis 12 entsprechende Ansicht der Antriebsvorrichtung bei sich in der offenen Position befindlichem Verdeck und sich in der ersten Position befindlichem Schwenkhebel.

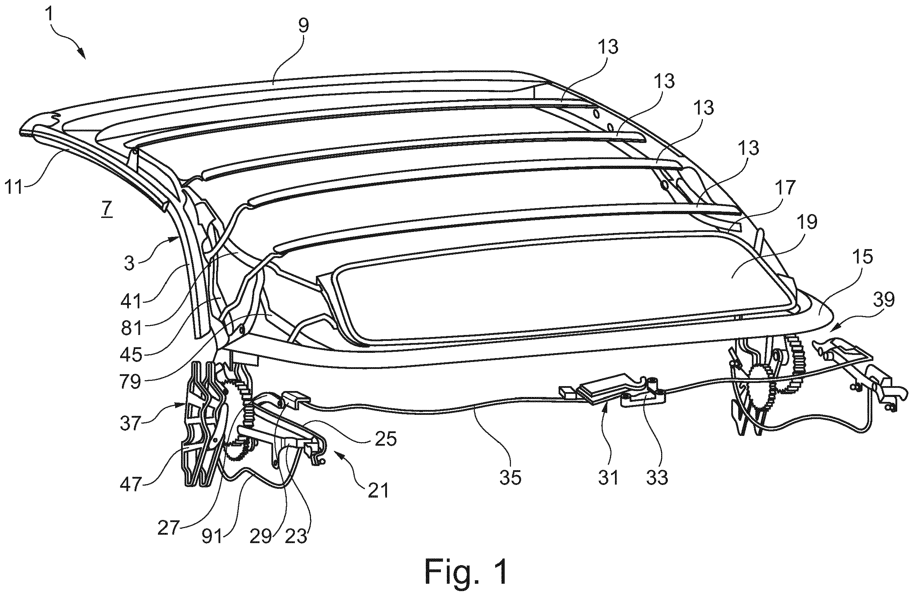

In Fig. 1 ist ein Softtop-Verdeck 1 eines Cabriolet-Fahrzeugs in einer geschlossenen Position ersichtlich, wobei ein das Verdeck 1 überspannender flexibler Verdeckbezug nicht dargestellt ist.

Das Verdeck 1 weist ein Verdeckgestänge 3 auf, mittels welchem das Verdeck 1 mittels einer Antriebseinrichtung 59 automatisiert zwischen der geschlossenen, einen Fahrgastraum 7 überspannenden Position und einer den Fahrgastraum 7 freigebenden offenen Position verlagerbar ist.

In geschlossener Position des Verdecks 1 grenzt eine Dachspitze 9 des Verdecks 1 an einen Windschutzscheibenrahmen des Cabriolet-Fahrzeugs. Seitlich wird das Verdeck 1 auf jeder Verdeckseite von seitlichen Dachrahmen 11 begrenzt, welche über Lenker des Verdeckgestänges 3 mit sich in Verdeckquerrichtung erstreckenden Querspriegeln 13 zusammenwirken. Das Verdeck 1 weist in bekannter Weise in einem heckseitigen Bereich einen in geschlossener Verdeckposition im Wesentlichen horizontal angeordneten und an einen Verdeckkastendeckel bzw. einen Heckdeckel des Cabriolet-Fahrzeugs grenzenden Stoffhaltebügel 15 auf, an welchen eine in einem Heckscheibenrahmen 17 gelagerte Heckscheibe 19 angebunden ist.

Zudem ist in der Fig. 1 ein Lenkermechanismus 21 mit hier drei Lenkern 23, 25, 27 und einer Aufnahme 29 ersichtlich, mittels welcher der Verdeckkastendeckel mit dem Lenkermechanismus 21 gekoppelt werden kann. Zum Antrieb des Lenkermechanismus 21 ist eine im Bereich einer Verdecklängsmittelebene angeordnete Antriebseinheit 31 vorgesehen, welche hier mittels eines Elektromotors 33 über Steigkabel 35 mit dem Lenkermechanismus 21 zusammenwirkt.

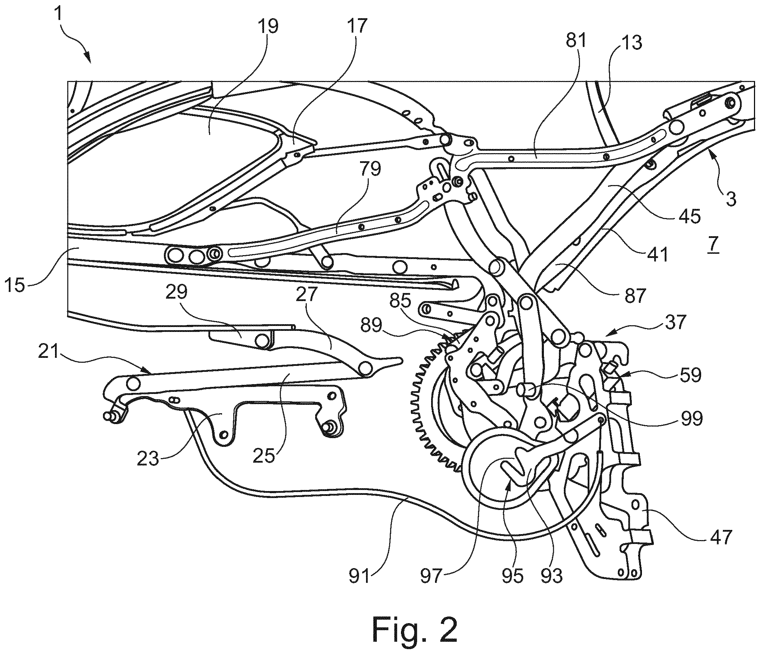

In Fig. 2 ist eine einer linken Verdeckseite zugeordnete Antriebsvorrichtung 37 näher ersichtlich, wobei auf einer rechten Fahrzeugseite eine im Wesentlichen baugleiche, aber spiegelbildlich ausgeführte Antriebsvorrichtung 39 vorgesehen ist. Die Antriebsvorrichtung 37 wird im Folgenden stellvertretend für die Antriebsvorrichtung 39 beschrieben.

Mittels der Antriebsvorrichtung 37 sind vorliegend zwei Schwenkbauteile antreibbar, wobei ein erstes Schwenkbauteil als Stoffhaltebügel 15 und ein zweites Schwenkbauteil als Hauptsäule 41 des Verdeckgestänges 3 ausgebildet ist. Bei einer alternativen Ausführung der Erfindung können auch andere Schwenkbauteile, wie beispielsweise ein Hauptlenker 45 des Verdeckgestänges 3, von der Antriebsvorrichtung 37 angetrieben werden.

Die Antriebsvorrichtung 37 ist über ein Hauptlager 47 karosseriefest gelagert und weist ein erstes, mit dem Stoffhaltebügel 15 wirkverbundenes Zahnrad 49 und ein zweites, mit der Hauptsäule 41 gekoppeltes Zahnrad 51 auf. Das zweite Zahnrad 51 ist hier als Zahnsegment mit einer Winkelerstreckung von vorliegend etwa 180° ausgeführt, kann aber alternativ hierzu auch - wie das erste Zahnrad 49 - ein klassisches Zahnrad mit einer Winkelerstreckung von 360° sein.

Die miteinander in Eingriff stehenden Zahnräder 49 und 51 sind hier jeweils an einem v-förmig ausgeführten Hebel 53 gelagert, wobei ein Mittelpunkt 57 des Zahnsegments 51 an einem ersten Schenkel 58 des Hebels 53 und ein Mittelpunkt 55 des ersten Zahnrads 49 im Bereich einer Verbindung von dem ersten Schenkel 58 des Hebels 53 mit einem zweiten Schenkel 75 des Hebels 53 gelagert ist. Im Bereich des zweiten Mittelpunkts 57 ist der Hebel 53 drehbar mit dem Hauptlager 47 verbunden.

Zur Übertragung einer Drehbewegung auf das erste Zahnrad 49 ist die als Elektromotor 59 ausgeführte Antriebseinrichtung vorgesehen, welche fest mit dem Hebel 53 verbunden ist und vorliegend über ein zwei Zahnräder 61, 63 aufweisendes Zwischengetriebe 65 mit einem drehfest mit dem ersten Zahnrad 49 verbundenen Zwischenrad 67 zusammenwirkt.

Der Stoffhaltebügel 15 ist über den Hebel 53 mit dem ersten Zahnrad 49 wirkverbunden, wobei der Stoffhaltebügel 15 über eine Zwischenschaltung von vorliegend drei Lenkern 69, 71, 73 mit einem zweiten Schenkel 75 des Hebels 53 verbunden ist. Ein erster Lenker 69 ist hierbei einerseits mit dem zweiten Schenkel 75 des Hebels 53 und andererseits mit einem hier mittigen Bereich eines zweiten Lenkers 71 verbunden. Der zweite Lenker 71 ist mit einem Endbereich mit einem dritten Lenker 73 und mit einem der Anbindung des dritten Lenkers 73 abweisenden Endbereich drehfest mit dem Hauptlager 47 verbunden. Ein Gelenkpunkt des zweiten Lenkers 71 mit dem dritten Lenker 73 ist dabei derart gewählt, dass dieser bei einer Verdeckbewegung eine Kreisbahn durchführt.

Der dritte Lenker 73 wiederum wirkt an einem der Anbindung des zweiten Lenkers 71 abweisenden Endbereich hier über ein Langloch 77 mit Spannstangen 79, 81 des Verdeckgestänges 43 zusammen, von welchen eine erste Spannstange 79 mit dem Stoffhaltebügel 15 und eine zweite Spannstange 81 mit dem Hauptlenker 45 verbunden ist. Bei entsprechenden Rahmenbedingungen kann der dritte Lenker auch ohne ein Langloch ausgeführt sein. Bei einer alternativen Ausführung der Erfindung kann auf den ersten Lenker und den zweiten Lenker verzichtet werden, wenn ein Gelenkpunkt des Hebels mit dem dritten Lenker bei einer Verdeckbewegung eine Kreisbahn durchläuft.

Zur Anbindung der Hauptsäule 41 an das zweite Zahnrad 51 bzw. das Zahnsegment, ist das Zahnsegment 51 mit einem Koppelelement 83 verbunden, an welchem ein mit zwei Hebeln 85, 87 ausgeführter Hebelmechanismus 89 angelenkt ist, welcher andernends mit der Hauptsäule 41 verbunden ist. Ein erster Hebel 85 des Hebelmechanismus 89 ist einenends an dem Koppelelement 83 und andernends an dem zweiten Hebel 87 angelenkt, welcher wiederum mit der Hauptsäule 41 verbunden ist. Die Hebel 85, 87 sind hier erforderlich, da das Zahnsegment 51 einen anderen Drehpunkt als die Hauptsäule 41 hat. Bei einer alternativen Ausbildung der Erfindung kann die Hauptsäule auch direkt mit dem Zahnsegment oder über einen anderen Mechanismus mit dem Zahnsegment verbunden sein.

Ausgehend von einem Zustand bei geschlossenem Verdeck 1 wird zur Öffnung des Stoffhaltebügels 15 über den Elektromotor 59 das erste Zahnrad 49 entgegen dem Uhrzeigersinn angetrieben. Das erste Zahnrad 49 dreht sich aufgrund der vorliegenden Gewichtskräfte mitsamt dem Hebel 53 und dem Elektromotor 59 um das feststehende Zahnsegment 51. Durch die Anbindung des Stoffhaltebügels 15 an den Hebel 53 wird dieser über die Lenker 69, 71, 73 von seiner in den Fig. 1 und 2 gezeigten geschlossenen Position in eine aufgeschwenkte Position verlagert. In dieser Position des Stoffhaltebügels 15 kann der Verdeckkastendeckel über den Lenkermechanismus 21 geöffnet und ein heckseitiger Stauraum, welcher zur Aufnahme des Verdecks 1 vorgesehen ist, freigegeben werden.

Während der Verdeckkastendeckel über die Antriebseinheit 31 in seine offene Position verlagert wird, wird ein an den Lenkermechanismus 21 gekoppelter Bowdenzug 91 bzw. ein Seilzug gespannt. Der Bowdenzug 91 ist an seinem dem Lenkermechanismus 21 abgewandten Ende mit einem Endbereich eines in einem mittigen Bereich an dem Hauptlager 47 gelagerten Schwenkhebel 93 einer Sperreinrichtung 95 verbunden.

Der Schwenkhebel 93 weist an seinem der Anbindung des eine Betätigungseinrichtung darstellenden Bowdenzugs 91 hier eine V-förmige Ausnehmung 97 auf, welche zum Zusammenwirken mit einem Anschlag 99 vorgesehen ist. Der Anschlag 99 ist hier im Bereich der gelenkigen Anbindung des Hebels 53 mit dem ersten Lenker 69 vorgesehen.

Bei einer Öffnung des Verdeckkastendeckels wird der Bowdenzug 91 mit einer Zugkraft beaufschlagt, welche den Schwenkhebel 93 aus seiner in den Fig. 1 bis 4 gezeigten Position in eine in Eingriff mit dem Anschlag 99 befindliche Position um seine hauptlagerfeste Lagerung verschwenkt.

Der Hebel 53 wird somit durch den Schwenkhebel 93 entgegen einer Drehung an dem Hauptlager 47 gehalten, so dass bei einer weiteren Betätigung des Elektromotors 59 eine hierdurch verursachte Drehbewegung des ersten Zahnrads 49 zu einer Drehung des Zahnsegments 51 um seinen Mittelpunkt 57 führt. Diese Drehbewegung des Zahnsegments 51 verursacht mittels der Hebel 85, 87 eine Bewegung der Hauptsäule 41, so dass das Verdeck 1 aus seiner mit der Dachspitze 9 an dem Windschutzscheibenrahmen angrenzenden Position mitsamt dem aufgestellten Stoffhaltebügel 15 in den heckseitigen Stauraum verlagert wird.

Nachdem das Verdeck 1 in dem heckseitigen Stauraum abgelegt ist, wird der Verdeckkastendeckel über die Antriebseinheit 31 wiederum in seine geschlossene Position überführt. Der Bowdenzug 91 überträgt bei nunmehr geschlossenem Verdeckkastendeckel keine Zugkraft mehr. Da der Schwenkhebel 93 im Bereich seiner hauptlagerfesten Lagerung mit einer Federeinrichtung 96 mit einer in Richtung seiner außer Eingriff mit dem Anschlag 99 befindlichen Position mit Kraft beaufschlagt ist, bewegt sich der Schwenkhebel 93 zurück in seine in den Fig. 1 bis 4 gezeigte Ausgangsposition, in welcher eine Betätigung des Elektromotors 59 eine Bewegung des Stoffhaltebügels 15 zur Folge hätte.

Bei einer Verdeckschließbewegung wird zunächst der Verdeckkastendeckel geöffnet, wobei hierdurch der Schwenkhebel 93 wiederum in seine Eingriffsposition mit dem Anschlag 99 verschwenkt wird. Eine Betätigung des Elektromotors 59 in einer gegenüber der Antriebsbewegung bei einer Verdecköffnung entgegengesetzten Bewegungsrichtung führt nun zu einer Aufschwenkung des Verdecks 1 in seine geschlossene Position mit aufgestelltem Stoffhaltebügel 15. Nach Erreichen dieser Position wird der Verdeckkastendeckel geschlossen, wodurch der Schwenkhebel 93 seine entriegelte Position einnimmt und eine weitere Betätigung des Elektromotors 59 zu einer Verschwenkung des Stoffhaltebügels 15 in seine im Wesentlichen horizontale, auf dem Verdeckkastendeckel angeordnete Position führt.

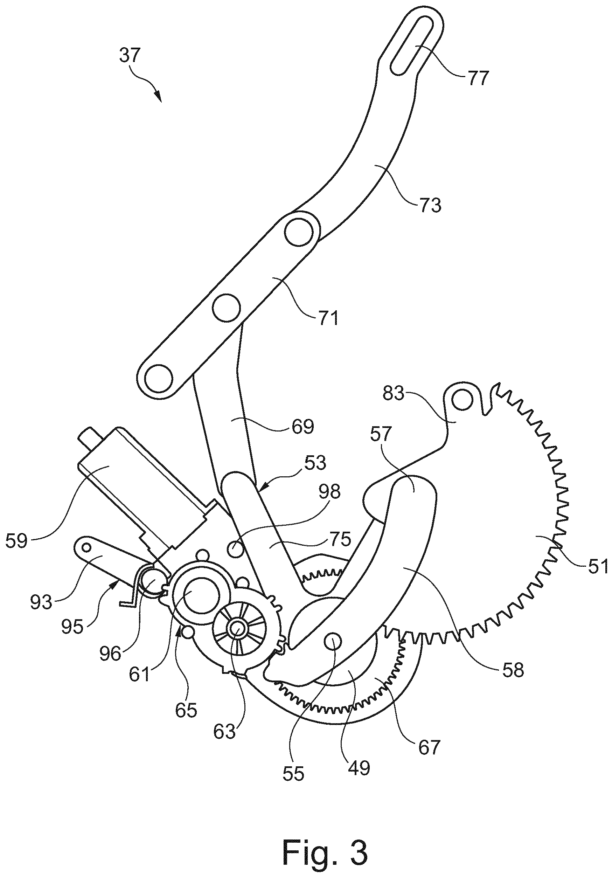

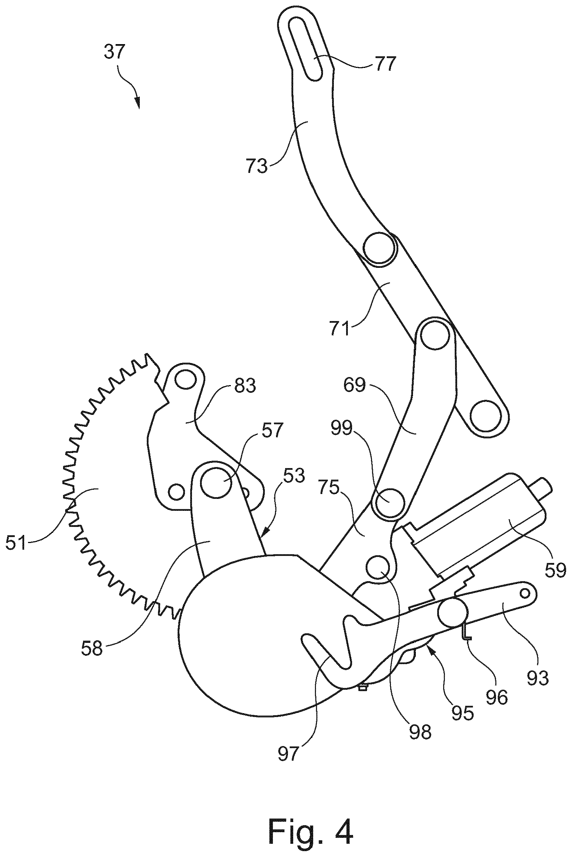

Wie in den Fig. 3 und 4 ersichtlich ist, ist der Elektromotor 59 über eine Schraube 98 mit dem Hebel 53 verbunden. Zur Notbetätigung des Verdecks 1 kann diese Schraube 98 gelöst werden und der Elektromotor 59 mit dem Zwischengetriebe 65 außer Eingriff mit dem Zwischenrad 67 gebracht werden. Das Verdeck 1 bzw. der Stoffhaltebügel 15 können dann manuell verlagert werden.

Neben der beschriebenen Ausführung, bei der zunächst der Stoffhaltebügel geöffnet, dann das Verdeck abgelegt und anschließend das Verdeck mitsamt dem aufgestellten Verdeck in seine abgelegte Position überführt wird, kann sich bei alternativen Ausführungen der Erfindung der Ablauf einer Verdecköffnungs- bzw. Verdeckschließbewegung hiervon auch unterscheiden. Beispielsweise kann es vorgesehen sein, dass der Stoffhaltebügel bevor die Hauptsäule bewegt wird zurück in seine horizontale Stellung oder auch eine Zwischenstellung verschwenkt wird.

Je nach Anordnung und Ausführung der Sperreinrichtung kann es auch vorgesehen sein, dass der Hebel in verschiedenen Stellungen gegenüber dem Hauptlager sperrbar ist. Zudem kann es vorgesehen sein, dass eine Drehbewegung des Elektromotors innerhalb eines gesamten Verdecköffnungs- bzw. Verdeckschließvorgangs wechselt, so dass beispielsweise eine Aufstellbewegung des Stoffhaltebügels durch eine Drehung des Elektromotors in einer ersten Drehrichtung und eine Verschwenkung des gesamten Verdecks durch eine Drehung des Elektromotors in einer entgegengesetzten Drehrichtung verursacht wird. Weiterhin kann durch eine flexible Sperrung auch vorgesehen sein, dass die Bewegung des Verdecks und diejenige des Stoffhaltebügels zumindest teilweise gleichzeitig ablaufen.

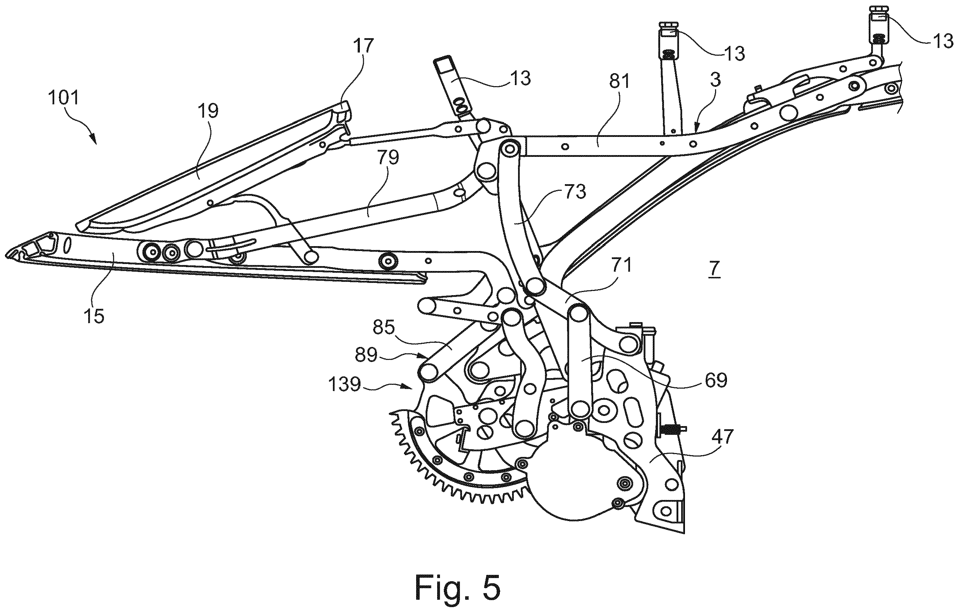

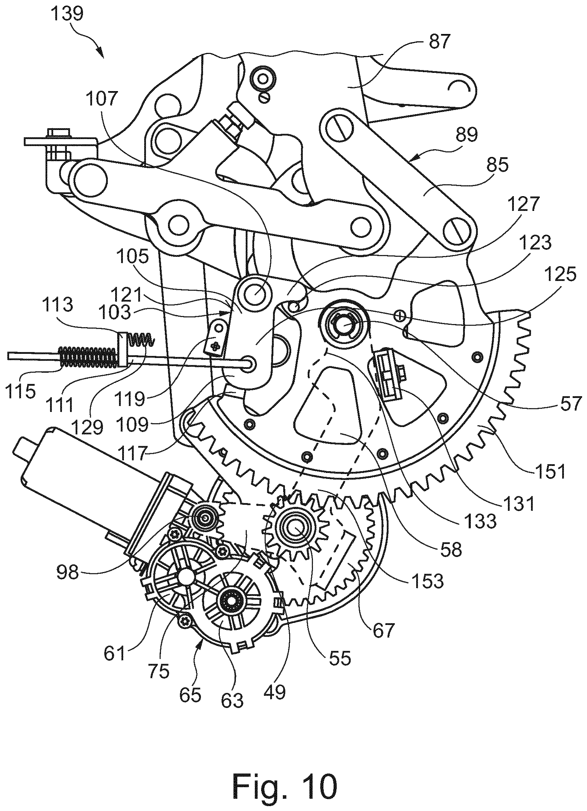

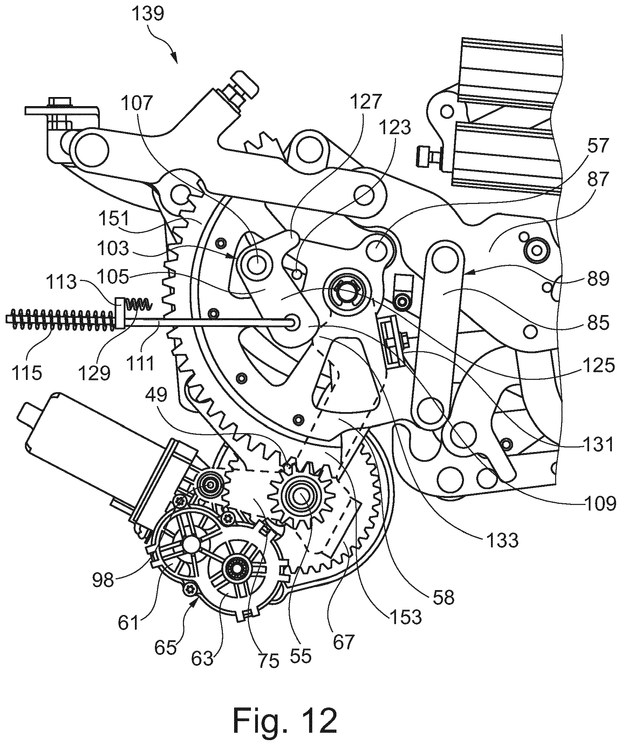

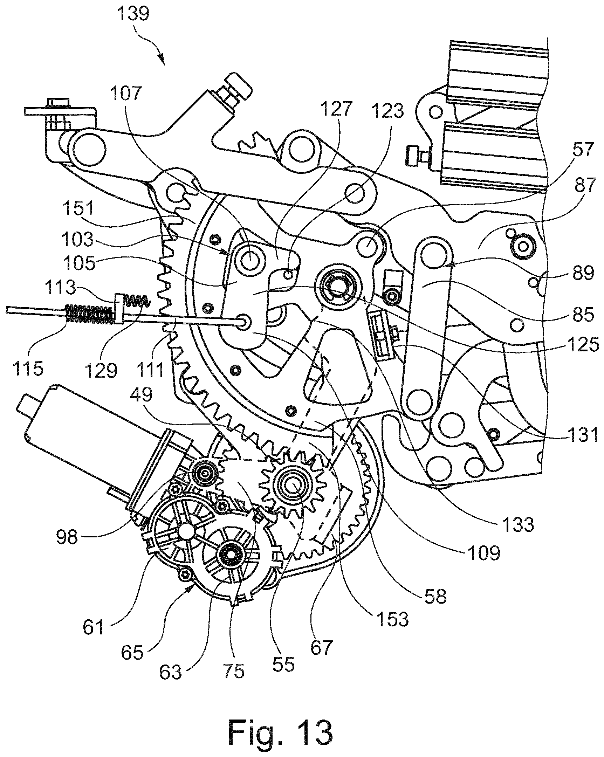

In den Fig. 5 bis 13 ist ein weiteres Ausführungsbeispiel gezeigt, welches ein Verdeck 101 mit im Wesentlichen vergleichbarem Aufbau wie das Verdeck 1 zeigt, so dass bei in den beiden Ausführungsbeispielen im Wesentlichen baugleichen Bauteilen die gleichen Bezugszeichen verwendet werden.

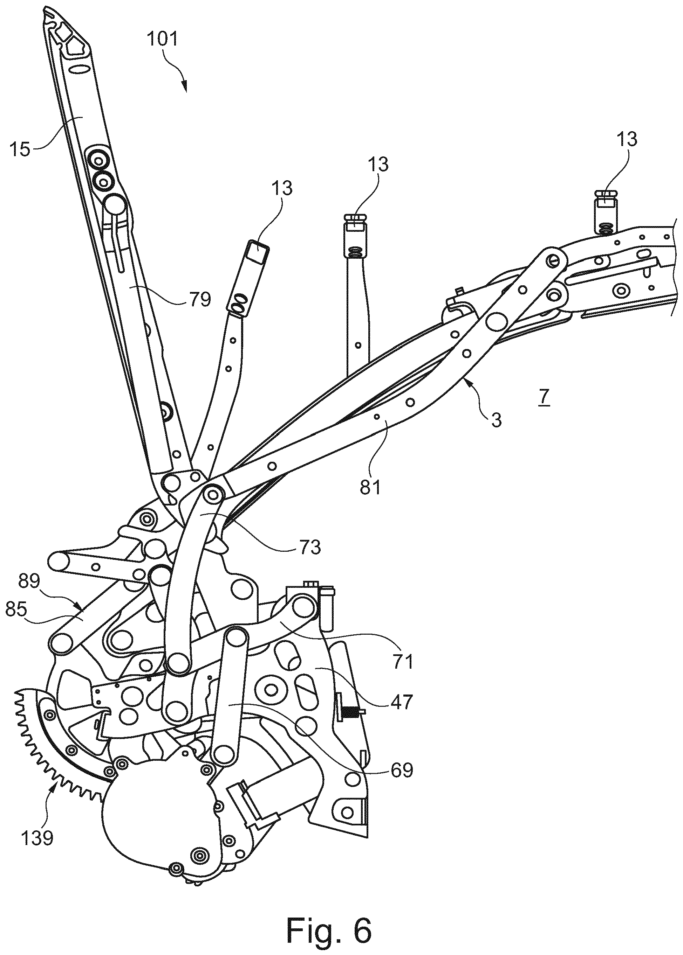

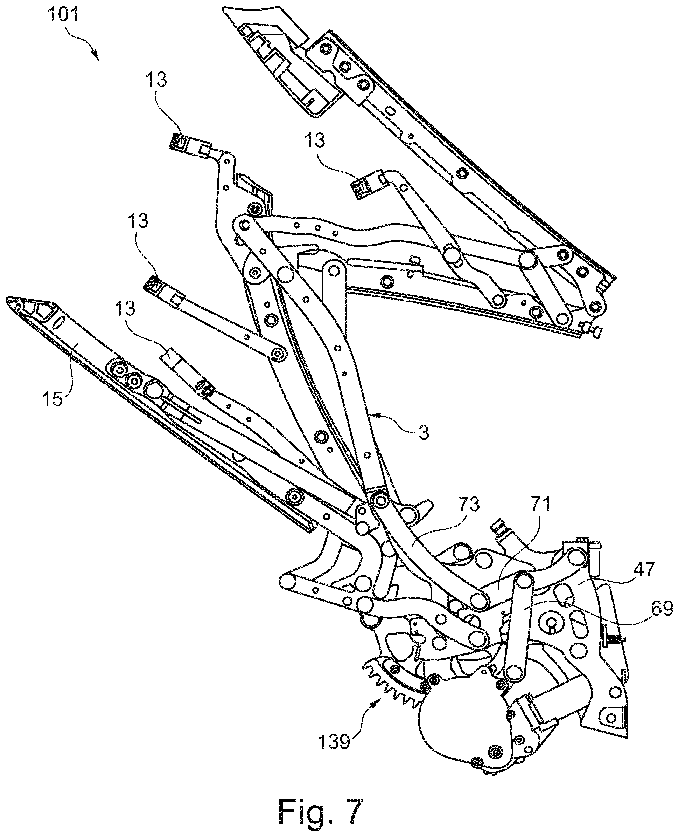

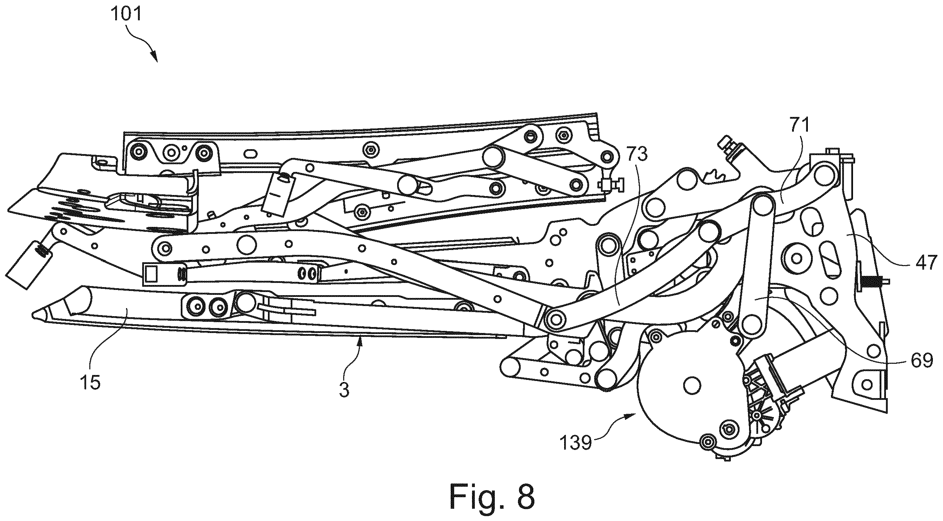

In den Fig. 5 bis 8 sind die Positionen des Verdecks 101 bei einer Verdecköffnungsbewegung gezeigt, wobei eine Verdeckschließbewegung in umgekehrter Reihenfolge abläuft. Die Positionen entsprechen im Wesentlichen den zu dem Verdeck 1 beschriebenen Positionen, wobei in Fig. 5 das Verdeck 101 in geschlossener Position gezeigt ist. In Fig. 6 ist der Stoffhaltebügel 15 in seiner aufgeschwenkten Position ersichtlich, wobei das Verdeck 101 in Fig. 7 in einer Zwischenposition zwischen der geschlossenen Position und einer in der Fig. 8 gezeigten offenen Position dargestellt ist.

Das Verdeck 101 weist im Unterschied zu dem Verdeck 1 anders ausgebildete Antriebsvorrichtungen 139 auf, welche sich im Wesentlichen durch eine verändert ausgeführte Sperreinrichtung 103 von den Antriebsvorrichtungen 37, 39 unterscheiden. Die Sperreinrichtung 103 ist mit einem hier etwa L-förmigen Schwenkhebel 105 ausgeführt, welcher an einem Gelenkpunkt 107 an dem Hauptlager 47 gelagert und in einem Endbereich 109 mit einer Stange 111 gelenkig verbunden ist. Die Stange 111 ist in einem mittleren Bereich fest mit einer Platte 113 ausgeführt, an welche auf einer dem Schwenkhebel 105 abgewandten Seite eine Druckfeder 115 in vorgespanntem Zustand anliegt. Ein die Druckfeder 115 umfassender Bereich der Stange 111 ist - wie in den Figuren nicht dargestellt - in einer hauptlagerfesten Führung gelagert, wobei ein der Platte 113 abgewandtes Ende der Druckfeder 115 an einer Wandung des Hauptlagers 47 anliegt.

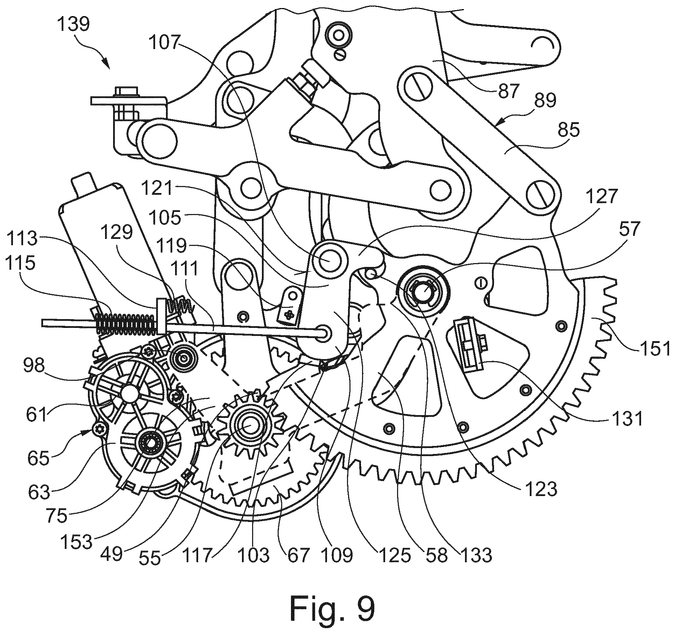

In den Fig. 9 bis 13 ist die der rechten Verdeckseite zugeordnete Antriebsvorrichtung 139 näher ersichtlich, wobei diese vom Aufbau im Wesentlichen identisch aber spiegelbildlich der Antriebsvorrichtung entspricht.

Die in Fig. 9 gezeigte Stellung der Antriebsvorrichtung 139 entspricht einer Stellung bei vollständig geschlossenem Verdeck 101. Der Schwenkhebel 105 liegt mit seinem Endbereich 109 an einem integral mit dem Zahnsegment bzw. zweiten Zahnrad 151 gebildeten Anschlag 117 an und verhindert, dass sich das Zahnsegment 151 in der gezeigten Darstellung im Uhrzeigersinn drehen kann. Die Position des Schwenkhebels 105 wird hierbei zusätzlich von einem weiteren Anschlag 119 unterstützt, an welchem sich der Schwenkhebel 105 mit einer der Platte 113 zugewandten Fläche 121 abstützt. Zudem ist ein mit dem Zahnsegment 151 verbundener, als Anschlag fungierender Bolzen 123 vorgesehen, an welchem der Schwenkhebel 105 in der beschriebenen Stellung mit einem zweiten Schenkel 127 anliegt, welcher sich hier im Wesentlichen senkrecht zu einem die Fläche 121 aufweisenden ersten Schenkel 125 des Schwenkhebels 105 erstreckt.

In dieser Stellung des Schwenkhebels 105 ist bei einer von dem Elektromotor 59 ausgelösten Drehbewegung des ersten Zahnrads 49 entgegen dem Uhrzeigersinn eine Drehbewegung des Zahnsegments 151 unterbunden. Entsprechend rollt das erste Zahnrad 49 auf dem Zahnsegment 151 ab und bewegt den Hebel 153, wobei durch die Kopplung des Elektromotors 59 an den Hebel 153 der Elektromotor 59 mitbewegt wird. Bei dieser Bewegung wird - wie im oben beschriebenen Ausführungsbeispiel - der Stoffhaltebügel 15 von seiner im Wesentlichen horizontalen Position in seine aufgestellte Position verlagert.

Das erste Zahnrad 49 rollt hierbei vorliegend über einem Winkelbereich von etwa 60° auf dem zweiten Zahnsegment 151 ab und kommt am Ende dieser Bewegung mit einem zusätzlichen hauptlagerfesten Anschlag 131 in Kontakt, welcher eine Weiterbewegung des Hebels 153 unterbindet und eine Endposition für den Hebel 153 definiert.

Der Winkelbereich des Zahnsegments, auf dem das erste Zahnrad abrollt, kann bei alternativen Ausführungen auf einfache Weise entsprechend der jeweiligen geometrischen Randbedingungen variiert werden.

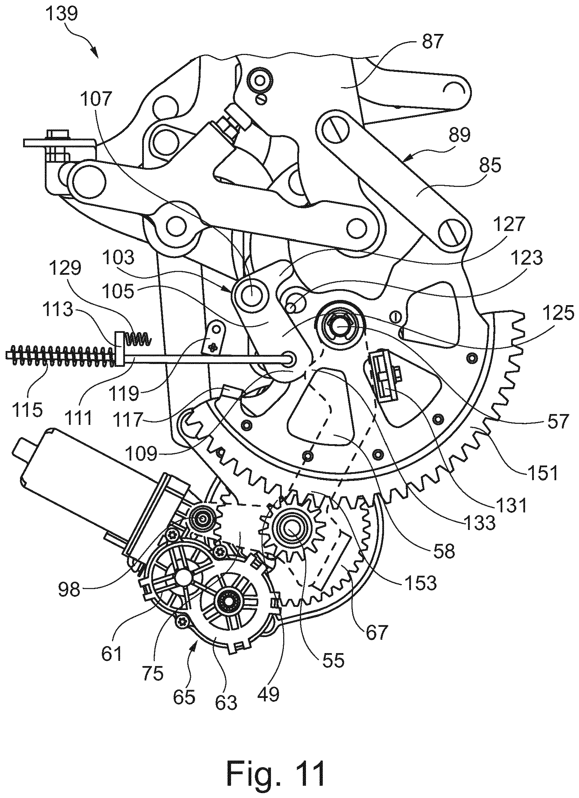

Während der Aufstellung des Verdeckkastendeckels wird wiederum der hier nicht näher ersichtliche Bowdenzug 91 betätigt, welcher mit seinem der Antriebsvorrichtung 139 zuweisenden Ende durch die Platte 113 geführt und mit einer eine größere Federrate als die Druckfeder 115 ausgeführten Druckfeder 129 zusammenwirkt. Der im Bereich der Stange 111 im Wesentlichen parallel zu dieser verlaufende Bowdenzug 91 gibt hierbei eine durch die Federkraft der Druckfeder 115 unterstützte Bewegung der Platte 113 in Richtung des Mittelpunkts 57 des Zahnsegments 151 frei, so dass der Schwenkhebel 105 in die in Fig. 11 gezeigte Position um den Gelenkpunkt 107 verschwenkt wird.

Der Schwenkhebel 105 kommt nach einer gewissen Verschwenkung mit seinem Endbereich 109 in Kontakt mit einem Absatz 133 des Hebels 153, wodurch der Hebel 153 nunmehr entgegen einer Bewegung im Uhrzeigersinn festgelegt ist. Der Schwenkhebel 105 wird in dieser Position von dem Bolzen 123 abgestützt, welcher an einer der Fläche 121 entgegengesetzten Seite des ersten Schenkels 125 des Schwenkhebels 105 anliegt. Mittels der Druckfeder 129 wird vorteilhafterweise ein Ausgleich von Toleranzen innerhalb des Systems erzielt. Die Druckfeder 115 weist in der in der Fig. 11 gezeigten Position eine nunmehr lediglich geringfügige Vorspannung auf.

Bei einer weiteren Betätigung des Elektromotors 59 wird das Zahnsegment 151 bei feststehendem Hebel 153 im Uhrzeigersinn gedreht, wobei hierdurch - wie in dem obigen Ausführungsbeispiel beschrieben - das Verdeck 101 mitsamt dem aufgestellten Stoffhaltebügel 15 in den heckseitigen Stauraum verlagert wird. Bei in dem heckseitigen Stauraum abgelegten Verdeck 101 wird der Verdeckkastendeckel wiederum geschlossen, wobei hierdurch der Bowdenzug 91 die Platte 113 in eine dem Zahnsegment 151 abweisende Richtung entgegen einer Federkraft der Druckfeder 115 zieht und der Schwenkhebel wiederum in seine ursprünglich beschriebene Stellung verlagert wird. Im Unterschied zu der Stellung bei geschlossenem Verdeck 101 liegt der Schwenkhebel 105 hierbei allerdings nicht an dem weiteren Anschlag 119 an.

Bei einer Überführung des Verdecks 101 von der offenen Position in die geschlossene Position laufen die beschriebenen Abläufe in umgekehrter Reihenfolge ab.

Die Bewegung des Schwenkhebels 105 bei geschlossenem Verdeck 101 von seiner mit dem Hebel 153 zusammenwirkenden Position in seine mit dem Zahnsegment 151 zusammenwirkende Position ist durch die Ankopplung an die Lenker 23, 25, 27 des Lenkermechanismus 21 bedingt, ist aber für die Umsetzung der Bewegung des Verdecks 101 nicht erforderlich und kann somit bei alternativen Ausführungen der Sperreinrichtung entfallen.

## Patentansprüche

1. Antriebsvorrichtung (37, 39, 139) eines Verdecks (1, 101) eines Cabriolet-Fahrzeugs, mittels welcher ein erstes Schwenkbauteil (15) und ein zweites Schwenkbauteil (41) verlagerbar ist, mit zwei Zahnrädern (49, 51, 151), von denen ein erstes Zahnrad (49) mit dem ersten Schwenkbauteil (15) und ein zweites Zahnrad (51, 151) mit dem zweiten Schwenkbauteil (41) koppelbar ist und die Zahnräder (49, 51, 151) miteinander in Eingriff sind, wobei zur Verlagerung des ersten Schwenkbauteils (15) das erste Zahnrad (49) auf dem zweiten Zahnrad (51, 151) abrollbar gelagert ist und zur Verlagerungsbewegung des zweiten Schwenkbauteils (41) das zweite Zahnrad (51, 151) drehbar gelagert ist, **dadurch gekennzeichnet,**
**dass** das zweite Zahnrad (51, 151) gegenüber dem ersten Zahnrad (49) drehfest festlegbar ist, so dass die Bewegung des ersten Schwenkbauteils (15) unabhängig von einer Bewegung des zweiten Schwenkbauteils (41) durchführbar ist.

2. Antriebsvorrichtung nach Anspruch 1,
**dadurch gekennzeichnet,**
**dass** das erste Zahnrad (49) gegenüber dem zweiten Zahnrad (51, 151) ortsfest festlegbar ist.

3. Antriebsvorrichtung nach einem der Ansprüche 1 oder 2, **dadurch gekennzeichnet,**
**dass** das erste Zahnrad (49) von einer Antriebseinrichtung (59), insbesondere einem Elektromotor antreibbar ist.

4. Antriebsvorrichtung nach Anspruch 3,
**dadurch gekennzeichnet,**
**dass** die Antriebseinrichtung (59) über ein Zwischengetriebe mit wenigstens einem Zahnrad (61, 63) mit dem ersten Zahnrad (49) zusammenwirkt.

5. Antriebsvorrichtung nach einem der Ansprüche 1 bis 4, **dadurch gekennzeichnet,**
**dass** das erste Zahnrad (49) und das zweite Zahnrad (51, 151) über einen Hebel (53, 153) miteinander verbunden sind, an welchem sowohl ein Mittelpunkt (55) des ersten Zahnrads (49) als auch ein Mittelpunkt (57) des zweiten Zahnrads (51, 151) drehbar gelagert ist.

6. Antriebsvorrichtung nach Anspruch 5,
**dadurch gekennzeichnet,**
**dass** die Antriebseinrichtung (59) mit dem Hebel (53, 153) verbunden ist.

7. Antriebsvorrichtung nach einem der Ansprüche 3 bis 6, **dadurch gekennzeichnet,**
**dass** die Antriebseinrichtung (59) außer Eingriff mit dem ersten Zahnrad (49) bringbar ist.

8. Antriebsvorrichtung nach einem der Ansprüche 1 bis 7, **dadurch gekennzeichnet,**
**dass** eine Sperreinrichtung (95, 103) vorgesehen ist, mittels welcher eine Position des ersten Zahnrads (49) gegenüber dem zweiten Zahnrad (51, 151) definiert festlegbar ist.

9. Antriebsvorrichtung nach Anspruch 8,
**dadurch gekennzeichnet,**
**dass** die Sperreinrichtung (95, 103) mit einem Schwenkhebel (93, 105) ausgebildet ist, der ortsfest gelagert ist und zur ortsfesten Festlegung des ersten Zahnrads (49) in Eingriff mit dem Hebel (53, 153) bringbar ist.

10. Antriebsvorrichtung nach Anspruch 9,
**dadurch gekennzeichnet,**
**dass** der Schwenkhebel (93, 105) mittels einer Federeinrichtung (96, 115) mit einer den Schwenkhebel (93, 105) in Richtung ihrer in Eingriff mit dem Hebel (53, 153) befindlichen Position drückenden Kraft beaufschlagt ist.

11. Antriebsvorrichtung nach einem der Ansprüche 9 oder 10, **dadurch gekennzeichnet,**
**dass** der Schwenkhebel (105) in eine in Eingriff mit dem zweiten Zahnrad (151) befindliche Position bewegbar ist, in welcher eine Drehung des zweiten Zahnrads (151) verhindert ist.

12. Antriebsvorrichtung nach einem der Ansprüche 9 bis 11, **dadurch gekennzeichnet,**
**dass** der Schwenkhebel (93, 105) von einem Betätigungselement (91) außer Eingriff mit dem Hebel (53, 153) bewegbar ist.

13. Antriebsvorrichtung nach Anspruch 12,
**dadurch gekennzeichnet,**
**dass** das Betätigungselement (91) als ein Bowdenzug ausgebildet ist.

## Claims

1. A drive device (37, 39, 139) for a hood (1, 101) of a convertible vehicle, by means of which a first pivoting part (15) and a second pivoting part (41) are displaceable, comprising two gears (49, 51, 151) of which a first gear (49) can be coupled with the first pivoting part (15) and a second gear (51, 151) can be coupled with the second pivoting part (41), and the gears (49, 51, 151) engage with each other, wherein, in order to displace the first pivoting part (15), the first gear (49) is supported so as to be able to roll on the second gear (51, 151) and, for the displacement movement of the second pivoting part (41), the second gear (51, 151) is supported in a rotatable manner,
**characterised in that** the second gear (51, 151) is fixed so as not to rotate with respect to the first gear (49), so that the movement of the first pivoting part (15) can be carried out independently of any movement of the second pivoting part (41).

2. The drive device according to claim 1, **characterised in that** the first gear (49) can be fixed so as to be stationary with respect to the second gear (51, 151).

3. The drive device according to any one of claims 1 or 2, **characterised in that** the first gear (49) can be driven by a drive means (59), in particular an electric motor.

4. The drive device according to claim 3, **characterised in that** the drive means (59) cooperates with the first gear (49) via an intermediate transmission comprising at least one gear (61, 63).

5. The drive device according to any one of claims 1 to 4, **characterised in that** the first gear (49) and the second gear (51, 151) are connected to each other via a lever (53, 153), on wich both a centre (55) of the first gear (49) and a centre (57) of the second gear (51, 151) are supported in a rotatable manner.

6. The drive device according to claim 5, **characterised in that** the drive means (59) is connected to the lever (53, 153).

7. The drive device according to any one of claims 3 to 6, **characterised in that** the drive means (59) can be disengaged from the first gear (49).

8. The drive device according to any one of claims 1 to 7, **characterised in that** a locking means (95, 103) is provided by means of which a position of the first gear (49) with respect to the second gear (51, 151) can be fixed in a defined manner.

9. The drive device according to claim 8, **characterised in that** the locking means (95, 103) is formed with a pivot lever (93, 105), which is supported in a stationary manner and can be engaged with the lever (53, 153) so as to fix the first gear (49) in a stationary manner.

10. The drive device according to claim 9, **characterised in that** a spring means (96, 115) subjects the pivot lever (93, 105) to a force pushing the pivot lever (93, 105) in a direction towards its position of engagement with the lever (53, 153).

11. The drive device according to any one of claims 9 or 10, **characterised in that** the pivot lever (105) can be moved into a position of engagement with the second gear (151), in which position the second gear (151) is prevented from rotating.

12. The drive device according to any one of claims 9 to 11, **characterised in that** the pivot lever (93, 105) can be moved by an actuating element (91) to disengage from the lever (53, 153).

13. The drive device according to claim 12, **characterised in that** the actuating element (91) is provided as a Bowden cable.

## Revendications

1. Dispositif d'entraînement (37, 39, 139) d'une capote (1, 101) d'un véhicule cabriolet, au moyen duquel dispositif une première partie pivotante (15) et une deuxième partie pivotante (41) sont déplaçables, ledit dispositif comportant deux roues dentées (49, 51, 151) dont une première roue dentée (49) peut être couplée avec la première partie pivotante (15) et une deuxième roue dentée (51, 151) peut être couplée avec la deuxième partie pivotante (41), et les roues dentées (49, 51, 151) s'engrènent les unes dans les autres, et afin de déplacer la première partie pivotante (15), la première roue dentée (49) est montée de manière à pouvoir rouler sur la deuxième roue dentée (51, 151) et, pour le déplacement de la deuxième partie pivotante (41), la deuxième roue dentée (51, 151) est montée de manière rotative, **caractérisé en ce que** la deuxième roue dentée (51, 151) peut être fixée en solidarité de rotation par rapport à la première roue dentée (49), permettant ainsi le mouvement de la première partie pivotante (15) de manière indépendante d'un mouvement de la deuxième partie pivotante (41).

2. Dispositif d'entraînement selon la revendication 1, **caractérisé en ce que** la première roue dentée (49) peut être montée de manière fixe par rapport à la deuxième roue dentée (51, 151).

3. Dispositif d'entraînement selon l'une quelconque des revendications 1 ou 2, **caractérisé en ce que** la première roue dentée (49) peut être entraînée par un moyen d'entraînement (59), notamment un moteur électrique.

4. Dispositif d'entraînement selon la revendication 3, **caractérisé en ce que** le moyen d'entraînement (59) coopère avec la première roue dentée (49) par un engrenage intermédiaire comportant au moins une roue dentée (61, 63).

5. Dispositif d'entraînement selon l'une quelconque des revendications 1 à 4, **caractérisé en ce que** la première roue dentée (49) et la deuxième roue dentée (51, 151) sont reliées l'une à l'autre par un levier (53, 153), sur lequel un centre (55) de la première roue dentée (49) ainsi qu'un centre (57) de la deuxième roue dentée (51, 151) sont montées de manière rotative.

6. Dispositif d'entraînement selon la revendication 5, **caractérisé en ce que** le moyen d'entraînement (59) est relié au levier (53, 153).

7. Dispositif d'entraînement selon l'une quelconque des revendications 3 à 6, **caractérisé en ce que** le moyen d'entraînement (59) peut être dégagé de la première roue dentée (49).

8. Dispositif d'entraînement selon l'une quelconque des revendications 1 à 7, **caractérisé en ce que** l'on prévoit un moyen de verrouillage (95, 103) permettant de fixer d'une manière définie une position de la première roue dentée (49) par rapport à la deuxième roue dentée (51, 151).

9. Dispositif d'entraînement selon la revendication 8, **caractérisé en ce que** le moyen de verrouillage (95, 103) est réalisé avec un levier pivotant (93, 105) qui est monté fixe et peut venir en prise dans le levier (53, 153) de manière à fixer la première roue dentée (49).

10. Dispositif d'entraînement selon la revendication 9, **caractérisé en ce qu'**un moyen élastique (96, 115) soumet le levier pivotant (93, 105) à une force poussant le levier pivotant (93, 105) vers sa position en prise dans le levier (53, 153).

11. Dispositif d'entraînement selon l'une quelconque des revendications 9 ou 10, **caractérisé en ce que** le levier pivotant (105) est déplaçable vers une position en prise dans la deuxième roue dentée (151), position dans laquelle une rotation de la deuxième roue dentée (151) est empêchée.

12. Dispositif d'entraînement selon l'une quelconque des revendications 9 à 11, **caractérisé en ce que** le levier pivotant (93, 105) est déplaçable par un élément d'actionnement (91) de manière à dégager le levier pivotant (93, 105) du levier (53, 153).

13. Dispositif selon la revendication 12, **caractérisé en ce que** l'élément d'actionnement (91) est réalisé sous forme d'un câble Bowden.
